# EUROPEAN PATENT APPLICATION

(11) **EP 1 519 544 A2**
(43) Date of publication of application: **30.03.2005**
(21) Application number: 04021453.8
(22) Date of filing: 09.09.2004
(51) Int. Cl.: H04M 1/02

(54) **Sliding-type portable wireless terminal and method for controlling sliding movement in in the same**

(30) Priority: 24.09.2003 KR 2003066392
(71) Applicant: Samsung Electronics Co., Ltd., Suwon-si, Gyeonggi-do (KR)
(72) Inventor: Jeong, Hun-Jong c/o SAMSUNG ELECTRONICS CO.,LTD., Suwon-si,Gyeonggi-do (KR); Yoo, Taig-Jong c/o SAMSUNG ELECTRONICS CO.,LTD., Suwon-si,Gyeonggi-do (KR)
(74) Representative: Grünecker, Kinkeldey, Stockmair & Schwanhäusser Anwaltssozietät

(57) **Abstract**

Disclosed is a sliding-type portable wireless terminal (100) capable of easily opening and closing a sub-body (102) in a lengthwise manner and a method for controlling a sliding movement thereof. The sliding type portable wireless terminal (100) includes a main body (101) and a sub-body (102) movable from an open position to a closed position with respect to the main body by slidably moving in a lengthwise direction with respect to the main body. The sliding type portable wireless terminal has a first gear (111) installed on an upper portion of the main body (101), a second gear (121) provided at a rear portion of the sub-body (102) in such a manner that the second gear (121) is engaged with the first gear (111), with a motor (115) connected to the first gear (111) so as to provide rotational force to rotate the first gear, and a control unit (10) for controlling an operation of the motor (115) in response to a predetermined key input signal (103a,255) by a user for controlling a sliding movement of the sub-body (102).

## Description

### PRIORITY

This application claims priority to an application entitled "*Sliding-type Portable Wireless Terminal and Method For Controlling Sliding Movement In the Same"* filed in the Korean Industrial Property Office on September 24, 2003 and assigned Serial No. 2003-66392, the contents of which are hereby incorporated by reference.

### BACKGROUND OF THE INVENTION

### 1. Field of the Invention

The present invention relates to a portable wireless terminal, and more particularly to a sliding-type portable wireless terminal capable of opening and closing a keypad of a main body through a sliding movement of a sub-body.

### 2. Description of the Related Art

In general, portable wireless terminals may be classified into bar-type, flip-type, and folder-type portable wireless terminals in accordance with external appearance thereof.

A bar-type portable wireless terminal has a transmitting/receiving unit and a data input/output device installed in a single housing, in which a keypad, which is a type of data input device, is always exposed to exterior elements, which increases the likelihood that the keypad will malfunction. In addition, since a predetermined distance is required between a transmitting unit and a receiving unit, miniaturization of bar-type portable wireless terminals is restricted.

A flip-type portable wireless terminal includes a body, a flip, and a hinge module connecting the body to the flip. A transmitting/receiving unit and a data input/output device are installed in the body. According to the flip-type portable wireless terminal, the flip covers the keypad and/or other data input device, thereby reducing malfunction of the keypad. However, the flip-type portable wireless terminal is also required to ensure an interval between a transmitting unit and a receiving unit, so miniaturization of flip-type portable wireless terminals is also restricted.

A folder-type portable wireless terminal includes a body, a folder, and a hinge module for rotatably connecting the body and the folder to each other. The folder-type terminal is opened and closed as the folder is rotatably moved toward and away from the body. In a state in which the folder is in a closed position with respect to the body, the folder-type portable wireless terminal is in a call-waiting mode. In this state, malfunction of the keypad is prevented. In addition, in a state of a calling mode, the folder-type portable wireless terminal can sufficiently ensure a distance between the transmitting unit and the receiving unit, so that it is possible to minimize the size of the folder-type portable wireless terminal. For this reason, folder-type terminals have been widely used as portable wireless terminals.

Meanwhile, as designs of the portable wireless terminals are variously diversified, a sliding-type portable wireless terminal, which includes a main body and a sub-body slidably mounted on the main body in order to open and close a keypad installed on the main body, has been suggested and commercially used.

However, a conventional sliding-type portable wireless terminal has a problem in that a user must manually operate the sub-body to open or close the sub-body.

### SUMMARY OF THE INVENTION

Accordingly, the present invention has been made to solve the above-mentioned problems occurring in the prior art, and an object of the present invention is to provide a sliding-type portable wireless terminal capable of easily opening and closing a sub-body and a method for controlling a sliding movement thereof.

Another object of the present invention is to provide a sliding-type portable wireless terminal capable of automatically opening and closing a sub-body and a method for controlling a sliding movement thereof.

In order to accomplish above objects, there is provided a sliding type portable wireless terminal including a main body and a sub-body movable from an open position to a closed position with respect to the main body by slidably moving in a lengthwise direction with respect to the main body, the sliding type portable wireless terminal comprising: a first gear installed on an upper portion of the main body; a second gear provided at a rear portion of the sub-body in a lengthwise direction of the sub-body in such a manner that the second gear is engaged with the first gear; a motor connected to the first gear so as to provide rotational force to rotate the first gear; and a control unit for controlling an operation of the motor in response to a predetermined key input signal by a user for controlling a sliding movement of the sub-body.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram showing a sliding type portable wireless terminal according to a preferred embodiment of the present invention;
FIG. 2 is a perspective view showing a main body separated from a sub-body of a sliding type portable wireless terminal according to one embodiment of the present invention;
FIG. 3 is an exploded perspective view of the sub-body of the sliding type portable wireless terminal shown in FIG. 2;
FIG. 4 is a perspective view showing the sliding type portable wireless terminal shown in FIG. 2 with the terminal assembled and closed;
FIG. 5 is a perspective view showing an opened keypad of the main body of the sliding type portable wireless terminal shown in FIG. 4;
FIG. 6 is a flowchart explaining a method for controlling a sliding movement in a sliding type portable wireless terminal according to a preferred embodiment of the present invention; and
FIG. 7 is a flowchart explaining a method for controlling a sliding movement in a sliding type portable wireless terminal when the sliding type portable wireless terminal receives a call signal according to a preferred embodiment of the present invention.

### DETAILED DESCRIPTION OF THE PREFERRED EMBODIMENTS

Hereinafter, preferred embodiments of the present invention will be described in detail with reference to the accompanying drawings. In the following description of the present invention, a detailed description of known functions and configurations incorporated herein will be omitted when it may make the subject matter of the present invention unclear.

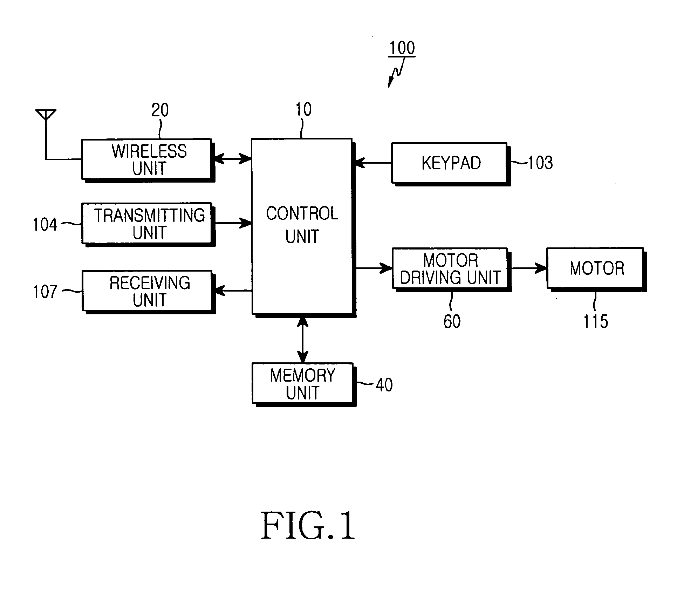

FIG. 1 is a block diagram of a sliding type portable wireless terminal 100 according to a preferred embodiment of the present invention. As shown in FIG. 1, the sliding type portable wireless terminal 100 according to the preferred embodiment of the present invention includes a control unit 10, a wireless unit 20, a voice processing unit 30 (not shown), a memory unit 40, and a keypad unit 103. Also, the sliding type portable wireless terminal 100 according to the preferred embodiment of the present invention includes a motor driving unit 60 and a motor 115 for providing a sliding action of the sliding type portable wireless terminal 100.

The control unit 10 controls an operation of the sliding type portable wireless terminal 100. In addition, the control unit 10 of the present invention provides a control signal to the motor driving unit 60 when the control unit 10 receives a slide-up signal or a slide-down signal from a user, thereby driving the motor 115 in an appropriate direction. Accordingly, the control unit 10 determines whether a sub-body is opened or closed if the control unit 10 receives the slide-up signal or the slide-down signal from the user. In addition, if the sub-body is opened, the control unit 10 provides the control signal to the motor driving unit 60 in such a manner that the motor 115 drives the sub-body to close the sub-body. Also, if the sub-body is closed, the control unit 10 provides the control signal to the motor driving unit 60 in such a manner that the motor 115 drives the sub-body in order to open the sub-body. The motor driving unit 60 preferably includes an analog switch, and the motor 115 is preferably a DC motor. Such an analog switch can convert a rotating direction of the DC motor by converting polarities applied to the terminals of the DC motor based on a control signal of the control unit 10.

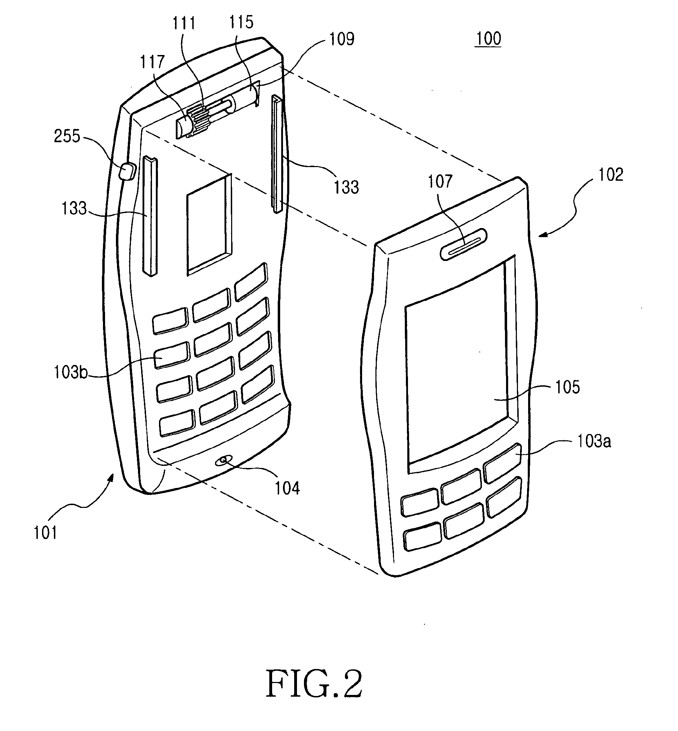

Also, a predetermined sliding movement operating key can be provided so as to allow the user to input the sliding-up signal and the sliding-down signal. Also, the sliding movement operating key can be provided in a keypad 103a of the sub-body 102, as shown in Fig. 2. The sliding movement operating key is provided only for a sliding operation of the sub-body. In addition, a conventional key that is otherwise provided for performing a predetermined function can act as the sliding movement operating key. However, the sliding movement operating key must be mounted at a position that the user can operate regardless of an opened/closed state of the sub-body.

Meanwhile, when a call signal is received, the user will typically press the sliding movement operating key, so that the control unit 10 can perform a call response. Therefore, the call response manner is typically provided in such a manner that the call response is performed only when the sliding movement operating key is operated by user. However, the user can also set the call response manner in relation to an incoming call. For example, the call response can be performed either by pressing a call key or by pressing the sliding movement operating key for the slide-up. If the user sets the call response manner such that the call response can be performed only when the user presses the call key, the call response will not be carried out when the user presses the sliding movement operating key. In addition, if the user sets the call response manner such that the call response can be performed only when the user presses the sliding movement operating key, the call response can only be performed when the user presses the sliding movement operating key.

Meanwhile, according to the present invention, although the user sets the call response manner such that the call response is carried out when the user presses the sliding movement operating key, if the sub-body is in an open state, the call response can be performed by pressing any key, including the sliding movement operating key. Based on the above, it will be apparent to those skilled in the art that other call response manners can be variously realized.

Referring again to FIG. 1, the wireless unit 20 of the wireless terminal controls transmitting/receiving voice and character data under the control of the control unit 10. The memory unit 40 stores program data required to control the mobile communication terminal and data generated when the mobile communication terminal is controlled or operated by the user. The keypad unit 103 includes a plurality of numeric and function keys, and outputs inputted data corresponding to a key selected by the user to the control unit 10. Also, a transmitting unit 104 converts an inputted voice signal of the user to an electrical signal, and a receiving unit 107 outputs a voice signal transmitted thereto from another wireless terminal, typically via a base station. A sliding operation principle of the sliding type portable wireless terminal will be explained below with reference to FIGs. 2 to 5.

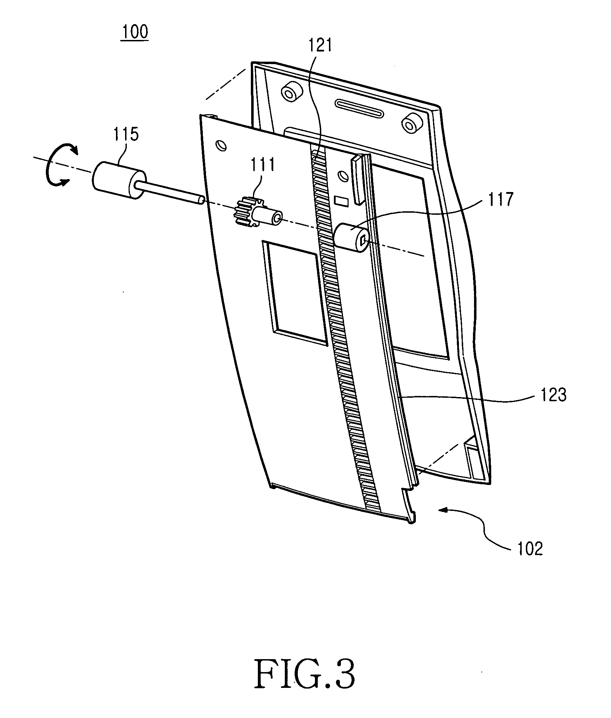

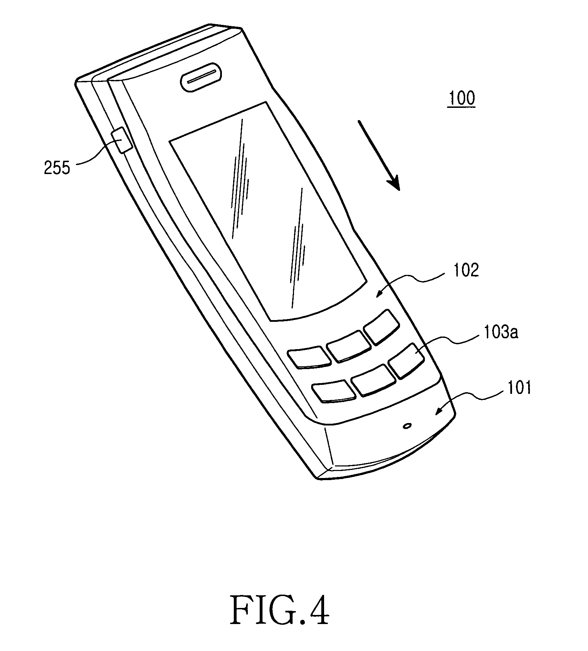

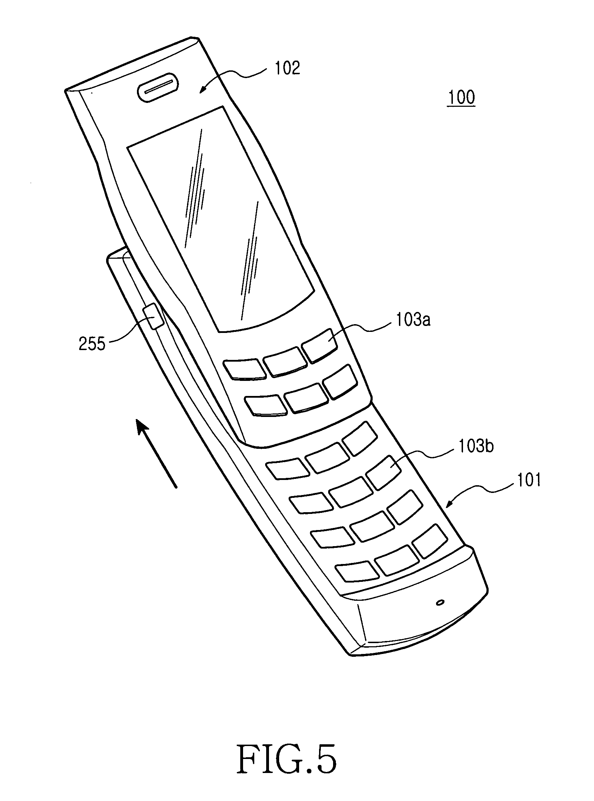

FIG. 2 is a perspective view showing a main body 101 separated from a sub-body 102 of a sliding type portable wireless terminal 100 according to the present invention, FIG. 3 is an exploded perspective view showing the sub-body 102 of the sliding type portable wireless terminal 100 shown in FIG. 2, FIG. 4 is a perspective view showing the sliding type portable wireless terminal 100 shown in FIG. 2 with the terminal 100 assembled and closed, and FIG. 5 is a perspective view showing a keypad 103b of the main body of the sliding type portable wireless terminal shown in FIG. 2.

As shown in FIGs. 2 to 5, the sliding type portable wireless terminal according to a preferred embodiment of the present invention includes the main body 101, the sub-body 102 capable of opening or closing a keypad 103b of the main body 101 by slidably moving in a lengthwise direction (see arrow in Figs. 4 and 5) with respect the main body 101, and an opening/closing device for opening or closing the sub-body 102.

Referring to FIG. 2, the main body 101 has provided at a lower front portion thereof keypad 103b and transmitting unit 104, which has a microphone, and has formed at an upper front portion thereof a slot 109, within which the opening/closing device is installed. The main body 101 preferably has provided at each side of the upper front portion thereof with a guide-rail 133 in a longitudinal, i.e. lengthwise direction thereof. The pair of guide-rails 133 extend a predetermined height beyond on the front surface of the main body 101, i.e. toward the main body, and are inwardly bent so as to guide a sliding movement of and retain the sub-body 102.

Also, the sub-body 102 is provided at a front portion thereof, i.e. a portion facing away from the main body 101, with a display unit 105, a keypad 103a, and a receiving unit 107, which has a speaker therein. Also, the sub-body 102 has formed at each side of a rear portion thereof with a guide-slot 123 (FIG. 3), which oppose respective guide-rails 133 of the main body 101 in a longitudinal direction thereof. Accordingly, the guide-slots 123 guide the sliding movement of the sub-body 102 from a first position closing the keypad 103b of the main body 101 to a second position opening the keypad 103b.

Referring to FIGs. 2 and 3, the opening/closing device includes a pinion gear 111, the motor 115 and a reduction module 117 accommodated in the slot 109 formed at the upper front portion of the main body 101, and a rack gear 121 longitudinally formed at the rear portion of the sub-body 102. It is understood from the structure of the opening/closing device that rotational force provided by the motor 115 is converted into a linear motion via the pinion gear 111 and the rack gear 121. When in a closed state, i.e. when the keypad 1036 of the main body is concealed, the motor 115 rotates such that the sub-body 102 opens, i.e. exposes, the keypad 103b. Rotational force of the motor 115 rotates the pinion gear 111 so as to move the rack gear 121 formed at the rear portion of the sub-body 102, thereby moving the sub-body 102. Also, the reduction module 117 is coupled with the other side of the pinion gear 111. The reduction module 117 prevents a sudden speed change of the sub-body 102 while the sub-body 102 is being moved from a start position to a stop position.

Meanwhile, a locking device is provided to lock the sub-body 102 to prevent the sub-body 102 from moving when in a closed state, and a stopper is also provided to restrict movement of the sub-body 102 to within a predetermined range (not shown in FIGs. 2 to 5), the operation and position thereof will be clearly understood to those skilled in the art.

Also, a key located at a side of the main body 101 and indicated by reference number 255 in FIGs. 2, 4 and 5 can act as the above-mentioned sliding movement operating key. The sliding movement operating key may be included in the keypad 103a provided on the sub-body 102.

As shown in FIGs. 4 and 5, the sliding type portable wireless terminal 100 is constructed in such a manner that the keypad 103b can be exposed or concealed, depending on the sliding movement of the sub-body 102 with respect to the main body 101.

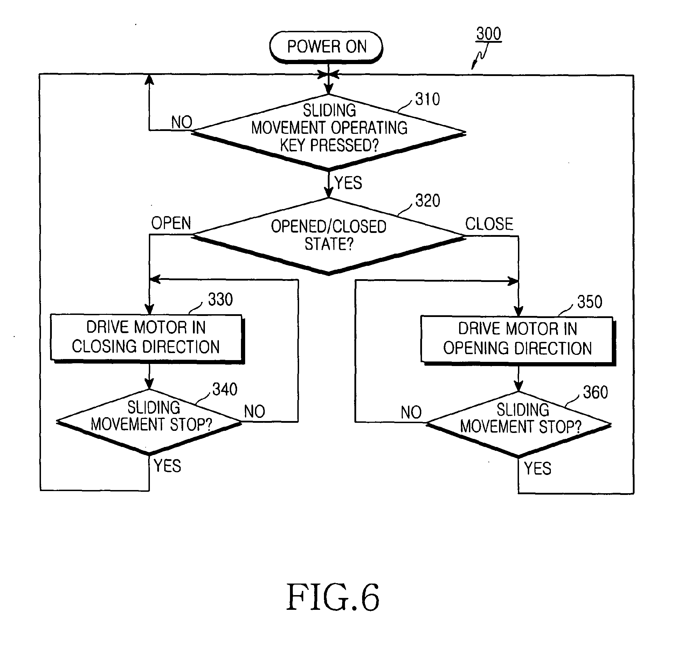

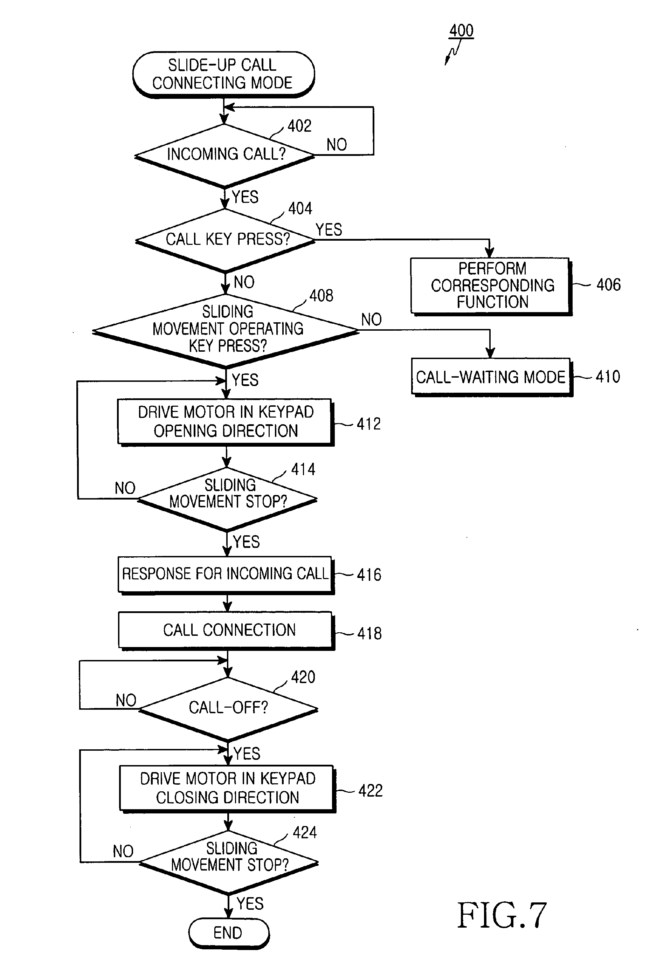

As explained above, the sub-body of the sliding type portable wireless terminal is moved by receiving rotational force of the motor 115. A method for controlling the sliding movement of such sliding type portable wireless terminal will be explained below with reference to FIGs. 6 and 7.

FIG. 6 is a flowchart 300 explaining a method for controlling the sliding movement of the sliding type portable wireless terminal according to a preferred embodiment of the present invention. Referring to FIGs. 1 and 6, the control unit 10 of the sliding type portable wireless terminal controls the sliding movement of the sub-body in response to user selection of the sliding movement operating key 255. Therefore, the control unit 10 determines whether the sliding movement operating key 255 is pressed (S310). Then, if the sliding movement operating key 255 is pressed, the control unit 10 proceeds to step 320. The control unit 10 determines whether the keypad 103b provided on the main body 101 is opened or closed (S320). As explained above, if the sub-body is determined to be in an opened state, the motor 115 drives the sub-body to move the sub-body into a closed position with respect to the main body. Alternatively, if the sub-body is determined to be in a closed state, the motor 115 drives the sub-body to move the sub-body into the open position. If the keypad 103b of the main body 101 is in the open position, the control unit 10 provides a control signal to the motor driving unit 60 in such a manner that the motor 115 drives closed the keypad 103b of the main body 101 (S330). Next, the control unit 10 determines whether the sliding movement of the sub-body stops (S340). If the sliding movement stops, the control unit 10 returns to step 310. It will be known to those skilled in the art that the sliding movement may be stopped by a stopper or limit switch.

Meanwhile, if the keypad 103b of the main body 101 is closed, the control unit 10 provides a control signal to the motor driving unit 60 in such a manner that the motor 115 drives open the keypad 103b of the main body 101 (S350). Next, the control unit 10 determines whether the sliding movement of the sub-body stops (S360). If the sliding movement stops, the control unit 10 returns to step 310.

As described above, according to the present invention, the sliding type portable wireless terminal performs the slide up action and the slide down action in response to operation of a predetermined key.

FIG. 7 is a flowchart 400 explaining a method for controlling a sliding movement when the sliding type portable wireless terminal receives an incoming call according to a preferred embodiment of the present invention.

As mentioned above, if a user presses the sliding movement operating key, the control unit 10 of the sliding type portable wireless terminal performs the call response. To this end, the call response manner can be pre-set by the user in such a manner that the call response is performed by the operation of the sliding movement operating key 255. Therefore, if the user sets the call response manner such that the call response is carried out by pressing the sliding movement operating key 255, the call response can be performed by pressing only the sliding movement operating key 255.

FIG. 7 shows the flowchart 400 when the call response manner set by the user is accomplished by pressing the sliding movement operating key 255. The control unit 10 of the sliding type portable wireless terminal will preferably perform the control procedure shown in FIG. 7 when the call signal is received and the sub-body 102 covers the keypad 103b of the main body 101. Hereinafter, a method for controlling the sliding movement when the incoming call is received according to a preferred embodiment of the present invention will be explained with reference to FIG. 7.

Referring to FIGs. 1 and 7, if the sub-body 102 closes, i.e. covers, the keypad 103b of the main body, the control unit 10 of the sliding type portable wireless terminal 100 determines whether the call signal is received (S402). If the call signal is received, the control unit 10 proceeds to step 404. Also, the control unit 10 determines in step 404 whether a predetermined call key is pressed by the user. For example, in a slide-up call connecting mode, although a response for the incoming call can be performed by means of the sliding movement operating key 255, the response for the incoming call can be also performed by pressing the predetermined call key, which is a key other than the sliding movement operating key 255. In general, because the sliding type portable wireless terminal is constructed in such a manner that communication is achieved in a slide-up state of the sub-body, that is, when the keypad 103b of the main body is in a closed state, the control unit 10 may check whether the predetermined call key is pressed by the user. If the predetermined call key is pressed by the user, the control unit 10 performs a general call communication process in step 406.

Meanwhile, if the call key is not pressed, the control unit 10 determines in step 408 whether the sliding movement operating key 255 is pressed by the user. If the sliding movement operating key 255 is not pressed by the user, the control unit 10 is converted into a call-wait mode, without performing the response to the incoming call, in step 410. However, if the sliding movement operating key 255 is pressed by the user, the control unit 10 proceeds to step 412.

In step 412, the control unit 10 provides a control signal to the motor driving unit 60 in order to drive the motor 115 to open the keypad 103b of the main body 101, that is, in order to drive the motor 115 in a slide-up direction. Subsequently, the control unit 10 determines in step 414 whether the sliding movement has or should be stopped. That is, the control unit 10 determines whether the sub-body 102 has opened the whole area of the keypad 103b of the main body 101. If the sliding movement stops, the control unit 10 proceeds to step 416 to transmit the response for the incoming call to the base station, thereby connecting the call in step 418. Also, if the sliding movement operating key 255 is pressed, the control unit 10 does not refuse the incoming call until the sliding movement stops.

Then, the control unit 10 determines in step 420 whether the call communication is finished. The finish of the call communication may be recognized when the user pushes a call-off key or when a call-off signal is transmitted from the base station. Also, the call-off may be recognized when the user presses the sliding movement operating key 255. It will be clear to those skilled in the art that various devices for terminating a call can be selectively installed in a wireless terminal by manufacturers of wireless terminals.

If the call is off, the control unit 10 proceeds to step 422. In step 422, the control unit 10 provides a control signal to the motor driving unit 60 in order to drive the motor 115 to close that the keypad 103b of the main body 101, that is, the motor 115 is driven in a slide-down direction. The control unit 10 controls the motor driving unit 60 in such a manner that the motor 115 can be continuously driven until the sliding movement stops. Also, the control unit 10 determines in step 424 whether the sliding movement stops. Next, if the sliding movement stops, that is, if the sub-body closes the whole area of the keypad 103b of the main body 101, the control unit 10 finishes the control procedure.

As explained above, according to the present invention, the slide-up or slide-down operation is automatically carried out in the sliding type portable wireless terminal. Therefore, it is not necessary for the user to manually operate the sliding movement of the sub-body.

Those of skill in the art will recognize that various modifications of the above described embodiments of the present invention are possible. For example, according to the present invention described above, the response to an incoming call is performed by automatically moving the sub-body into the slide-up state if the user presses the sliding movement operating key when the incoming call is received. However, according to another embodiment of the present invention, the sub-body can be moved into the slide-up state to perform the response for the incoming call even if the user presses the call key to initiate a call. In addition, although the present invention describes that the sub-body is automatically moved into the slide-up state in response to the operation of the sliding movement operating key and is automatically moved into the slide-down state when the call is off, it will be appreciated that the slide-up state can be maintained when the call is off.

While the invention has been shown and described with reference to certain preferred embodiments thereof, it will be understood by those skilled in the art that various changes in form and details may be made therein without departing from the spirit and scope of the invention as defined by the appended claims.

## Claims

1. A sliding type portable wireless terminal including a main body and a sub-body movable from an open position to a closed position with respect to the main body by slidably moving in a lengthwise direction with respect to the main body, the sliding type portable wireless terminal comprising:
a first gear installed on a portion of the main body;
a second gear provided at a portion of the sub-body and positioned lengthwise along the sub-body in such a manner that the second gear is engaged with the first gear;
a motor for providing a rotational force to the first gear; and
a control unit for controlling the motor in response to a predetermined key input signal provided by a user for controlling a sliding movement of the sub-body with respect to the main body.

2. The sliding type portable wireless terminal according to claim 1, wherein the control unit determines whether the sub-body is opened, and provides a control signal to a motor driving unit to drive the motor to move the sub-body into the closed position if the sub-body is in the open position.

3. The sliding type portable wireless terminal according to claim 1, wherein the control unit determines whether the sub-body is closed, and provides a control signal to a motor driving unit to drive the motor to move the sub-body into the open position if the sub-body is in the closed position.

4. The sliding type portable wireless terminal according to claim 1, wherein, when an incoming call is received when the sub-body is in the closed position, the control unit provides a control signal to a motor driving unit to drive the motor to move the sub-body into the open position.

5. The sliding type portable wireless terminal according to claim 4, wherein the predetermined key input signal controlls the sliding movement of the sub-body, and a response to the incoming call is transmitted to a base station when the sub-body is fully opened.

6. The sliding type portable wireless terminal according to claim 4, wherein the control unit maintains a call receiving state until the sub-body stops the sliding movement if the predetermined key signal is inputted in response to the incoming call.

7. The sliding type portable wireless terminal according to claim 1, wherein the control unit provides a control signal to a motor driving unit to drive the motor to move the sub-body into the closed position when a call is terminated.

8. A sliding type portable wireless terminal including a main body and a sub-body movable from an open position to a closed position with respect to the main body by slidably moving in a lengthwise direction with respect to the main body, the sliding type portable wireless terminal comprising:
a first gear installed on a portion of the main body;
a second gear provided at a portion of the sub-body and positioned lengthwise along the sub-body in such a manner that the second gear is engaged with the first gear;
a motor for providing a rotational force to the first gear ;
a motor driving unit for driving the motor;
a sliding movement operating key for performing a slide-up operation and a slide-down operation of the sub-body; and
a control unit for providing a control signal to the motor driving unit for controlling an operation of the motor in response to an operation of the sliding movement operating key.

9. A method for controlling a sliding movement in a sliding type portable wireless terminal including a main body and a sub-body movable from an open position to a closed position with respect to the main body by slidably moving in a lengthwise direction with respect to the main body, the method comprising the steps of:
i) installing a first gear on a portion of the main body;
ii) providing a second gear at a portion of the sub-body and positioned lengthwise along the sub-body in such a manner that the second gear is engaged with the first gear;
iii) installing a motor for providing rotational force to the first gear; and
iv) controlling the motor in response to a predetermined key input signal provided by a user for controlling the sliding movement of the sub-body with respect to the main body.

10. The method according to claim 9, further comprising a step of determining whether the sub-body is opened and providing a control signal to a motor driving unit to drive the motor to move the sub-body into the closed position if the sub-body is in the open position.

11. The method according to claim 9, further comprising a step of determining whether the sub-body is closed, and providing a control signal to a motor driving unit to drive the motor to move the sub-body into the open position if the sub-body is in the closed position.

12. The method according to claim 9, further comprising a step of providing a control signal to a motor driving unit in order to drive the motor to move the sub-body into the open position in response to the predetermined key input signal when an incoming call is received when the sub-body is in the closed position, and transmitting a response to the incoming call to a base station when the sub-body is fully opened.

13. The method according to claim 12, further comprising a step of maintaining a call receiving state until the sub-body stops the sliding movement if the predetermined key signal is inputted in response to the incoming call.

14. The method according to claim 12, further comprising a step of providing a control signal to a motor driving unit to drive the motor to move the sub-body into the closed position when a call is terminated.
